## Europäisches Patentamt
## European Patent Office
## Office européen des brevets

(19)

(11) Veröffentlichungsnummer : **0 330 901 B1**

(12) **EUROPÄISCHE PATENTSCHRIFT**

(45) Veröffentlichungstag der Patentschrift :
21.11.91 Patentblatt 91/47

(51) Int. Cl.$^5$ : **G01B 21/04**

(21) Anmeldenummer : **89102489.5**

(22) Anmeldetag : **14.02.89**

(54) Mehrkoordinatenmess- und prüfeinrichtung.

(30) Priorität : 02.03.88 DE 3806686

(43) Veröffentlichungstag der Anmeldung :
06.09.89 Patentblatt 89/36

(45) Bekanntmachung des Hinweises auf die
Patenterteilung :
21.11.91 Patentblatt 91/47

(84) Benannte Vertragsstaaten :
CH DE FR GB IT LI

(56) Entgegenhaltungen :
EP-A- 0 206 744
GB-A- 2 190 487
US-A- 3 750 295
"Fertigungsmesstechnik", Hrsg. Warnecke
und Dutschke, Springer Verlag 1984, Seiten
292-294

(73) Patentinhaber : WEGU-MESSTECHNIK GMBH
Wendelstrasse 90
W-6633 Wadgassen (DE)

(72) Erfinder : Gurny, Werner
Wendelstrasse 90
W-6633 Wadgassen (DE)

## Beschreibung

Die Erfindung betrifft eine Mehrkoordinatenmeß- und -prüfeinrichtung mit einer Maschinengrundeinheit, einem ersten und einem zweiten in zumindest zwei Koordinatenrichtungen bewegbaren Tastsystem und einer Maschinensteuerungseinheit

Eine Mehrkoordinatenmeß- und -prüfeinrichtung der eingangs genannten Art ist aus der US-A-3750295 bekannt. Diese bekannte Meßmaschine weist zwei voneinander getrennte Pinolen auf, an denen jeweils mechanische Tastsysteme mit Taststiften befestigt sind. Mit dieser bekannten Meßmaschine lassen sich demzufolge zwei Werkstücke gleichzeitig und unabhängig voneinander durch die mechanischen Tastsysteme vermessen.

Neben diesen herkömmlichen Meßmaschinen mit mechanischem Tastkopf sind auch schon Meß- und Prüfmaschinen für die berührungslose Messung bekannt, beispielsweise Interferometersysteme.

Aus der DE-OS 3616812 ist beispielsweise eine Koordinatenmeßvorrichtung mit einer Einrichtung zur berührungslosen Antastung des Meßobjektes bekannt. Durch ein interferometrisches Längenmeßsystem wird der Verfahrweg eines für jede Meßkoordinate mit dem Koordinatentisch fest verbundenen Meßspiegels bestimmt. Dabei ist der Referenzspiegel des interferometrischen Längenmeßsystems mit dem Antastsystem des Meßobjektes starr verbunden, um so mit geringem technischen Aufwand auch sehr kleine Verlagerungen des abbildenden Objektivs gegenüber der angemessenen Koordinatenrichtung erfassen und Kippfehlereinflüsse ausschließen zu können.

Die DE-OS 3616245 offenbart ein Interferometersystem zur Längen- und Winkelmessung, das aus insgesamt zwei Interferometersystemen besteht, um gleichzeitig mit großer Genauigkeit sowohl Längen- und Winkelmessungen als auch Brechzahlmessungen durchführen zu können.

Das Prinzip der interferometrischen Längenmessung ist bereits seit dem Jahre 1890 durch den Michelson-Interferometer bekannt. Man weiß aber auch, daß ein Laserinterferometer als Längenmeßsystem gegenüber anderen, beispielsweise mechanischen Tastköpfen, einen nicht unbeträchtlichen Mehraufwand bedingt. Mit Laserinterferometersystemen läßt sich eine Auflösung von bis zu 0,01 μm erreichen. Jedoch ist die Laserlichtwellenlänge abhängig von der Temperatur, dem Druck und der Feuchte des vom Meßstrahl durchlaufenen Bereichs. Eine Schwankung dieser Umgebungsbedingungen wirkt sich trägheitslos auf das Meßergebnis aus. Dies bedeutet, daß Laserinterferometer-Längenmeßsysteme einerseits eine sehr gute Möglichkeit des genauen, berührungslosen Messens bieten, andererseits jedoch bei ungünstigen Umgebungsbedingungen fehlerhafte Meßergebnisse liefern können.

Neben den vorgenannten berührungslosen Meßsystemen sind die mechanischen Tastsysteme allgemeiner Stand der Technik. Diese mechanischen Tastsysteme für Mehrkoordinatenmeßmaschinen bestehen im wesentlichen aus einer Pinole, an der ein Tastkopf befestigt ist, den Taststiften und den an den Spitzen der Taststifte vorgesehenen Tastkugeln. Die mechanischen Tastsysteme sind relativ robust und weisen eine ausreichende Meßgenauigkeit auf. Die Auslenkung des Taststiftes kann translatorisch oder rotatorisch sein und erzeugt beim Antasten an das Werkstück Steuersignale für die Antriebe. Diese Signale ermöglichen gleichbleibende, reproduzierbare Antastbedingungen. Bei den bekannten Tastsystemen wird ferner zwischen messenden und schaltenden Systemen unterschieden

Bei den messenden Tastsystemen wird in der Meßposition die Taststiftauslenkung durch kleine Wegmeßsysteme erfaßt, während bei den schaltenden Tastsystemen bei Erreichen des definierten Antastzustandes oder einer definierten Tasterauslenkung ein Schaltsignal im Tastkopf erzeugt wird.

Bisher hatte der Fachmann vor Anschaffung und Einsatz einer Koordinatenmeß- und -prüfeinrichtung immer sehr sorgfältig die Einsatzbedingungen und Meßaufgaben zu prüfen, bevor er sich für die eine oder andere Einrichtung, nämlich das berührungslose oder das mechanische Tastsystem entschied. Die Bereitstellung von beiden Einrichtungsvarianten verbot sich oft aus Platz- und Integrations- sowie Kostengründen.

Aufgabe der Erfindung ist es deshalb, eine Mehrkoordinatenmeß- und -prüfeinrichtung zu schaffen, die unabhängig von Umgebungsbedingungen für die in der Praxis auftretenden, unterschiedlichen Meß- und Prüfaufgaben einsetzbar ist und einfach und mit geringem Technischen Aufwand realisierbar ist.

Diese Aufgabe wird durch die Merkmale des Patentanspruchs 1 gelöst.

Durch diese Ausbildung bedient sich die Meß- und Prüfeinrichtung aller bekannten Vorteile der einzelnen Tastsysteme innerhalb einer Einheit. Mit diesem Mehrkoordinatenmeß- und -prüfzentrum sind alle vorkommenden Meßaufgaben unter allen Umgebungsbedingungen optimal lösbar. Das Meß- und Prüfzentrum kann als Einzeleinheit aufgestellt werden. Es kann ebenso auch in Transfermaschinenanlagen oder Bearbeitungsanlagen integriert werden und dadurch im Arbeitsfluß einsetzbar sein. Die Koordinatenmeß- und -prüfeinrichtung vereinigt entsprechend der Erfindung den berührungslos arbeitenden Videotaster, das Laser-Scan-System und den berührenden Meßtaster. Es können sowohl beliebige Oberflächenkonturen berührungslos automatisch vermessen werden als auch reine Meßaufgaben erledigt werden, wobei die gesamte Einrichtung diese Aufga-

2

ben ohne Umrüstung optimal bewältigt. Die eingesetzte Software koordiniert die Kommunikation mit dem Videoprozessorsystem und die CNC-Bahnsteuerung der Einrichtung. Nach dem Erfindungsgedanken können die eingesetzten unterschiedlichen Tastsysteme unabhängig voneinander und alternativ die Meß- und Prüfaufgaben erledigen. Sie können ebensogut auch in Zweier- oder Dreierkombination gekoppelt werden und dann parallel nebeneinander Meß- und Prüfaufgaben erfüllen und schließlich so gesteuert werden, daß vorliegende Meß- und Prüfaufgaben durch die Tastsysteme hintereinander und in abwechselnd unterschiedlicher Zweier- und Dreierkombination bewältigt werden.

Besondere Ausführungsarten der Erfindung sind in den abhängigen Ansprüchen beschrieben.

In Ausbildung der Erfindung können zwei in Z-Koordinatenrichtung bewegbare Pinolen vorgesehen sein, von denen eine den mechanischen Tastkopf mit Taststiften und die andere den Videotaster und den Lasertaster aufnimmt. Dabei können die Pinolen an einem gemeinsamen Meßschlitten angeordnet sein.

In weiterer Ausbildung kann für jede Pinole ein getrennter Meßschlitten vorgesehen sein, wobei die Meßschlitten sowohl synchron als auch getrennt voneinander in wahlweise gleiche oder unterschiedliche Koordinatenrichtungen bewegbar sein können.

Der geringste technische Aufwand liegt dann vor, wenn die zwei in Z-Richtung eingesetzten Pinolen mit den jeweiligen Tastsystemen an einem gemeinsamen Schlitten oder sonstigen Träger befestigt sind. Dadurch kann allerdings bei bestimmten Meß- und Prüfaufgaben eine Einschränkung beispielsweise hinsichtlich der Meßzeit eintreten. Durch die Aufnahme der zwei Pinolen an getrennten Meßschlitten oder Trägern wird eine Reihe von Vorteilen erzielt. Die Meßschlitten können im Sinne der Erfindung synchron in gleicher oder unterschiedlicher Koordinatenrichtung bewegbar sein. Sie können ebenso auch zu unterschiedlichen Zeiten in gleiche oder unterschiedliche Koordinatenrichtungen gefahren werden. Die Vielzahl der mit dieser Art der Pinolenaufnahme verbundenen Möglichkeiten gewahrleistet ein Messen und Prüfen unter verschiedenen Bedingungen und das Lösen auch komplizierter Meßaufgaben in kurzer Zeit. Durch die Kombination der Tastsysteme in einer Maschineneinrichtung können ferner die Meßergebnisse des einen Systems durch das andere System überprüft werden.

In weiterer Ausbildung der Erfindung kann der Lasertaster sowohl im Scanbetrieb als auch als Autofokus einsetzbar sein.

Nach einem weiteren Merkmal regelt der Lasertaster im Scanbetrieb die Bewegung der Z-Achse kontinuierlich entsprechend der Oberflächenkontur, wobei vorteilhafterweise die Abtastrichtung in X- und Y-Achse beliebig vorgebbar ist. Um die konturerfassende Meßachse in Echtzeit kontinuierlich innerhalb des Laserfangbereiches regeln zu können und hohe Scangeschwindigkeiten bei gleichzeitig hoher Meßgenauigkeit von etwa 0,5 µm und eine einstellbare Meßauflösung von 0,1 µm bis 10 µm zu gewährleisten, kann der Lasertaster im Scanbetrieb berührungslos mit konstantem Abstand der Oberflächenkontur eines Werkstückes in den Koordinatenrichtungen X und Y folgen, wobei das Laserscansystem aus zwei miteinander verketteten, geschlossenen Regelkreisen gebildet ist, von denen der erste Regelkreis die Sendeleistung des Lasers auf das Reflektionsverhalten des Werkstückes abstimmt und in Abhängigkeit vom Empfangssignal im Empfänger das Sendesignal im Sender steuert, während der zweite übergeordnete Regelkreis das kontinuierliche Nachführen des Schlittens bzw. der Pinole in Z-Richtung in die optimale Schärfeebene steuert.

Dabei kann in vorteilhafter Ausbildung das Empfängersystem Differenzdioden aufweisen, durch welche ein Differenzsignal entsprechend der Schärfeeinstellung des Objektivs erzeugt wird, das über einen Achsenverstärker und einen Servomotor die Z-Achse automatisch in die Schärfeebene positioniert. Der Meßschlitten bzw. die Pinole mit dem Lasertaster kann für die Z-Achse ein Meßsystem mit einem Glasmaßstab besitzen und die jeweilige Höhenposition auf der Z-Achse dem Hauptrechner zuleiten.

In noch weiterer Ausbildung kann der Videotaster Meßpunkte an der äußeren Kontur des Werkstückes aufnehmen, die durch ein von einem Videoprozessor erzeugtes digitalisiertes Bild des jeweiligen Werkstückausschnittes bestimmt sind. Die Konturen des Werkstückes in den X- und Y-Koordinaten können dabei durch Kantenfinderroutinen im digitalisierten Bild erfaßbar sein, und die Meßpunkte in Z-Richtung können mit einer Fokussiereinrichtung und dem Kamerabild oder einem hochgenauen Laser-Fokussiersystem gebildet werden. Bei der Kantenfinderroutine werden einzelne Meßpunkte miteinander zu einem Meßprogramm verkettet. Das digitalisierte Bild kann sowohl ein Graubild als auch ein Binärbild sein.

Schließlich kann der mechanische Taster wahlweise ein schaltender oder ein messender Taster sein, und die Maschinengrundeinheit kann in Portalbauweise mit einem massiven Grundbett ausgeführt sein, die zur Werkstückaufnahme wahlweise einen Drehmeßtisch aufweist und an einer Traverse den oder die Meßschlitten für die Pinolen längsverschieblich in einer zu dem Portal rechtwinkligen oder gleichgerichteten Verfahrrichtung aufnimmt, wobei die oder der Meßschlitten und die Pinolen von einem Bedienpult steuerbar sind und die erzielten Meßergebnisse am Bildschirm einer Anzeigeeinheit und/oder durch einen Drucker protokollierbar sind.

In der Zeichnung sind Beispiele der Erfindung dargestellt, die nachfolgend mit weiteren Vorteilen erläutert werden. Es zeigen :

Figur 1    eine Dreikoordinatenmeßeinrichtung in vereinfachter perspektivischer Darstellung
Figur 2    eine Dreikoordinatenmeßeinrichtung mit zwei Meßschlitten für die Z-Pinolen in vereinfachter perspektivischer Darstellung
Figur 3    ein Blockschaltbild des Laserscansystems mit dem Autofokussystem.

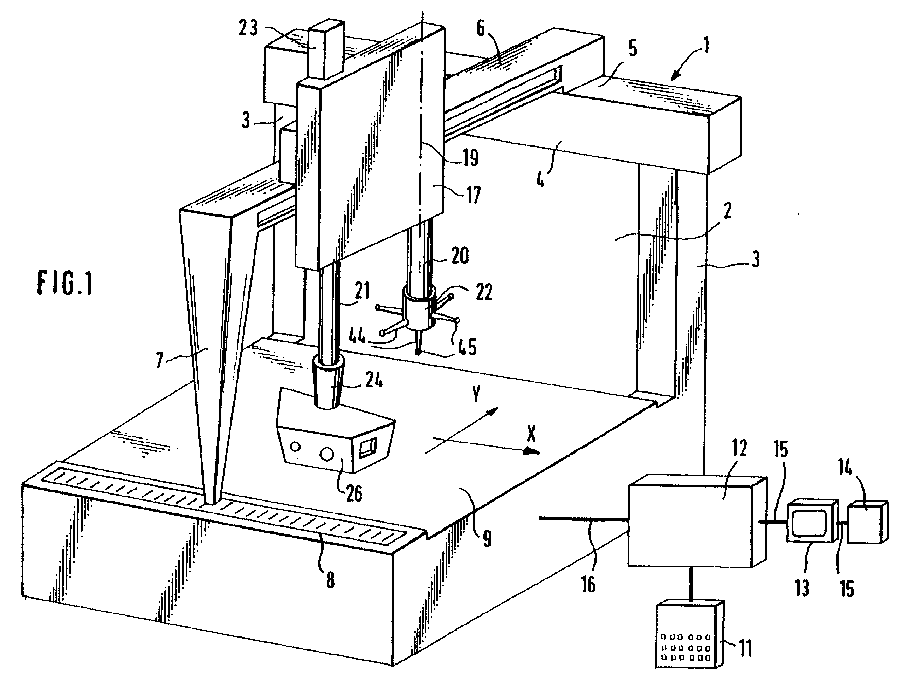

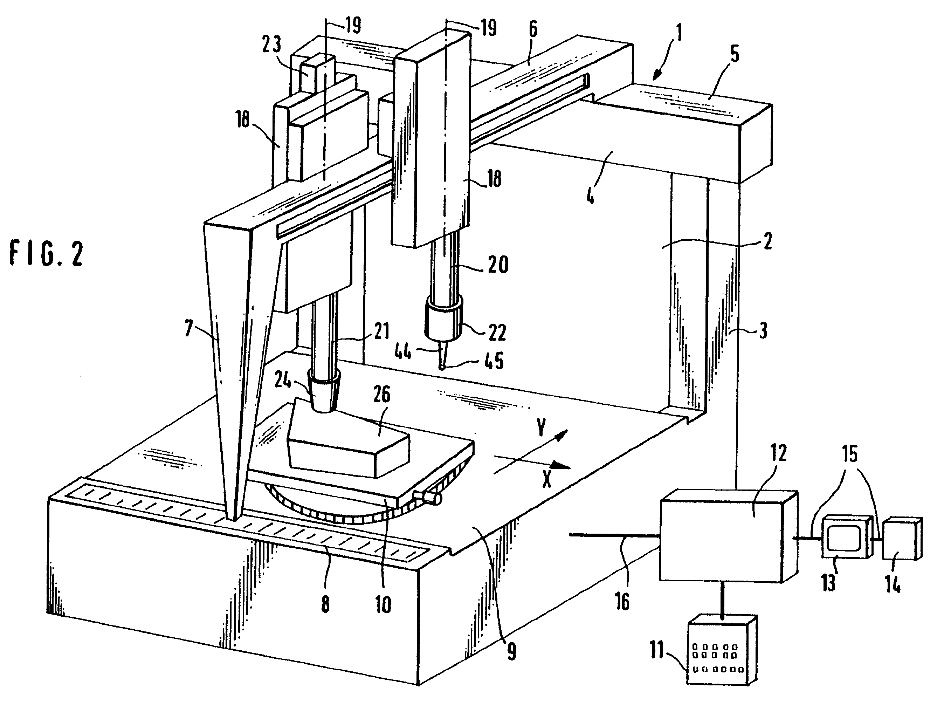

Die Dreikoordinatenmeßeinrichtung 1 gemäß den Figuren 1 und 2 ist eine in Portalbauweise aufgebaute Meßmaschine mit einem feststehenden Portal 2, welches aus den beiden Seitenstützen 3 Und der Traverse 4 gebildet ist Die Traverse 4 stellt gleichzeitig die Führungsbahn 5 für den Querträger 6 dar, welcher sich mit einer Stütze 7 auf der zweiten Führungsbahn 8 abstützt. Der Querträger 6 ist entlang der beiden parallel angeordneten Führungsbahnen 5 und 8 bis gegen Endanschläge über einen Meßtisch 9 verfahrbar, der zwischen dem Portal 2 und der Führungsbahn eingerichtet ist. Der Meßtisch 9 ist gemäß Figur 2 als ein Drehmeßtisch 10 ausgebildet.

Mit 11 ist eine Eingabetastatur oder Funktionstastatur dargestellt, mit welcher die einzelnen Funktionen der Meßeinrichtung 1 abrufbar sind. Um die Befehle entsprechend in Funktionen umzusetzen, befindet sich zwischen der Eingabetastatur 11 und der Meßeinrichtung 1 ein Rechner 12. Die Meßergebnisse sind auf einem Bildschirm 13 und/oder einem Drucker 14 anzeigbar bzw. protokollierbar. Zu diesem Zweck sind der Bildschirm 13 einer Anzeigeeinheit und der Drucker 14 ebenfalls mit dem zentralen Rechner 12 durch die Leitungen 15 verbunden. Die Leitung 16 vom Rechner 12 ist mit Antriebselementen, wie beispielsweise Antriebsmotoren für die Fahrbewegung des Querträgers 6 und der Schlitten 17 und 18, und mit elektronischen Einrichtungen der Tastsysteme verbunden

An dem Querträger 6 ist ein Schlitten 17 angeordnet, der um 90° versetzt zur Fahrtrichtung des Querträgers 6 an diesem bewegbar ist. Der Meßschlitten 17 nimmt zwei in Z-Richtung 19 verschiebbare Pinolen 20 und 21 auf

Entsprechend der Figur 2 sind an dem Querträger 6 zwei Meßschlitten 18 entlang dem Querträger 6 verfahrbar angeordnet. Beide Meßschlitten 18 weisen je eine in Z-Richtung 19 bewegbare Pinole 20 und 21 auf und sind unabhängig voneinander steuerbar. Die Meßschlitten 18 können sowohl synchron in gleicher wie in entgegengesetzter Richtung verfahrbar sein. Sie können alternativ bewegbar sein und die unterschiedlichen Fahrtrichtungen und Bewegungsarten ausführen.

Die Pinolen 20 und 21 sind ebenfalls so gesteuert, daß sie synchron in gleicher wie in entgegengesetzter Richtung bewegbar sind oder alternative Bewegungen ausführen.

In dem Ausführungsbeispiel weist jeweils die Pinole 20 den schaltenden Tastkopf 22 und die Pinole 21 den Videotaster 23 und den Lasertaster 24 auf. Natürlich ist ebenso auch die umgekehrte Zuordnung möglich.

Für die Konturerfassung von Werkstückoberflächen 25 ist die Dreikoordinatenmeßeinrichtung 1 mit einem Lasertaster 24 an der Pinole 21 versehen, mit dem beliebige Oberflächenkonturen berührungslos automatisch vermessen werden. Im Gegensatz zu den im Triangulationsverfahren arbeitenden Lasern folgt der hier eingesetzte Lasertaster mit konstantem Abstand der Oberflächenkontur. Dieses Verfahren hat den Vorteil, daß die konturerfassende Meßachse in der Echtzeit kontinuierlich innerhalb des Laserfangbereiches geregelt und vom zentralen Rechner 12 abgelesen wird. Daraus resultieren eine hohe Scan-Geschwindigkeit und eine hohe Meßgenauigkeit. Die wesentlichen technischen Vorteile des eingesetzten Lasertasters 24, der nachfolgend noch genauer beschrieben ist, sind :

— berührungslose und meßkraftfreie Meßwerterfassung
— hohe Scan-Geschwindigkeit
— einstellbare Meßauflösung von 0,1 µm bis 10 µm
— hohe Meßgenauigkeit von 0,5 µm

Der Lasertaster 24 regelt die Bewegung in der Z-Achse 19 kontinuierlich entsprechend der Oberflächenkontur. Die Abtastrichtungen in der X- und der Y-Achse sind durch die Meßschlitten 17 und 18 und durch den Querträger 6 beliebig vorgebbar durch die Eingabetastatur 11 mit Rechner 12. Dem Tastprinzip liegt ein sogenanntes Lichtschnittverfahren zugrunde, bei dem die reflektierende Oberfläche des Werkstükkes 26 als Referenz für die Scharfstellung benützt wird. Als Lichtquelle 27 dient eine Impuls-Laserdiode 28, deren Leuchtfläche mittels eines optischen Systems durch die optische Achse 29 des jeweils benutzten Objektivs 30 auf die Werkstückoberfläche 25 abgebildet wird. Der Lichtstrahl 31 trifft ausgehend von der Impuls-Laserdiode 28 auf einen 45° geneigten Spiegel 32, wird von dort zu einer Optik 34 umgelenkt und gleichzeitig zu einem wiederum 45° geneigten zweiten Spiegel 33 geleitet und von diesem zu dem Objektiv 30 über der Werkstückoberfläche 25 gelenkt. Von dort wird der Lichtstrahl 31 reflektiert und über die Spiegel 33 und 32 zu der Optik 34 zurückgesandt. Das Werkstück 26 remittiert also einen Teil des reflektierten Laserlichtes durch Objektiv 30 und optisches System 33, 32, 34 auf ein mit Differenzdioden 35 bestücktes Empfängersystem 36. Aufgrund der bei diesem System angewandten Abbildungsart wandert der Meßpunkt bei Defokussierung aus und erzeugt ein Differenz-

4

signal im Achsenverstärker 37, welches die Z-Achse 19 über einen Servomotor 38 wieder in die Schärfeebene positioniert. Bei 39 ist der Meßpunkt Plus um den Wert $\Delta$ F verschoben, während bei 40 die Verschiebung nach Minus um den Wert $\Delta$ F erfolgt ist. Entsprechend dem optischen System werden diese Meßpunkte zu den Differenzdioden 35 reflektiert und im Empfänger 36 als Signal über dem Sender 28 zur Anpassung des Meßschlittens 18 in der Z-Koordinate 19 weitergegeben.

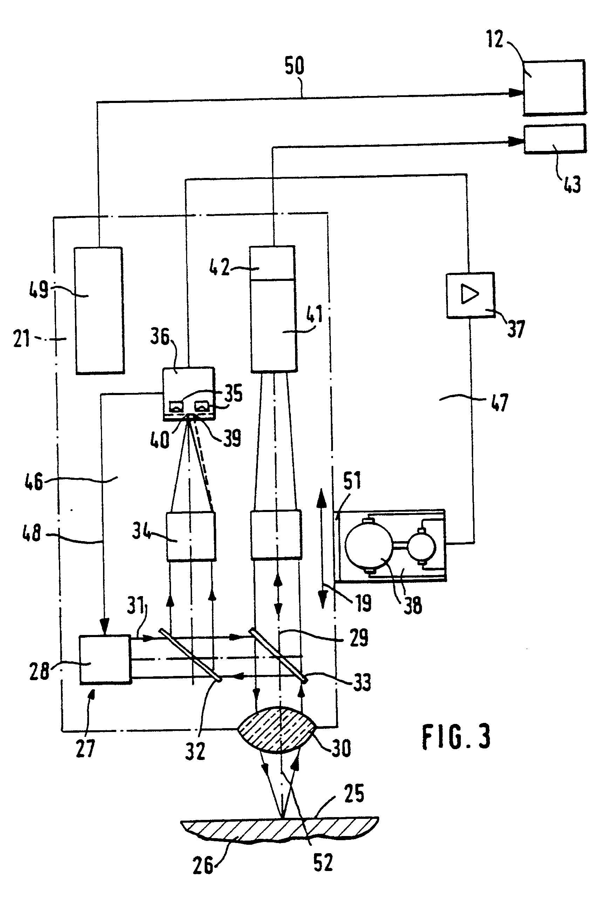

Wie aus der Figur 3 ferner ersichtlich ist, besitzt die Pinole 21 neben dem Lasertaster 24 noch den Videotaster 23, der im wesentlichen aus einer Kamera 41 mit einer Bildverarbeitungseinrichtung 42 besteht. Der Videotaster 23 arbeitet berührungslos auf der Z-Achse 19 durch das Objektiv 30 auf die Werkstückoberfläche 25. Die Bestimmung der einzelnen Meßpunkte eines zu erfassenden Werkstückes 26 erfolgt anhand eines von einem Videoprozessor 43 digitalisierten Graubildes des Meßobjektausschnittes. Die Meßpunkte werden dabei an der äußeren Kontur der Werkstücke 26 aufgenommen. Die jeweiligen Konturen in der X- und Y-Richtung werden durch Kantenfinderroutinen im Graubild erfaßt, während in Z-Richtung 19 die Meßpunkte mit der automatischen Fokussiereinrichtung und unter Zuhilfenahme des Kamerabildes oder mit einem hochgenauen Laser-Fokussiersystem gebildet werden.

Figur 3 zeigt im Prinzip zwei ineinandergeschachtelte Regelkreise 46 und 47. Der Regelkreis 46 steuert über die Verbindung 48 in Abhängigkeit des Empfangssignals das Steuersignal im Sendesystem 28. Der Regelkreis 46 stimmt die Sendeleistung des Dauerstrichlasers 24 auf das jeweilige Reflektionsverhalten des Werkstückes 26.

Der Regelkreis 47 ist dem Regelkreis 46 übergeordnet und steuert den Autofokus über den Servomotor 38. Hier wird das kontinuierliche Nachführen des gesamten Schlittens 21 in Z-Richtung für eine stets optimale Schärfeebene ermöglicht. Die Position des Schlittens 21 in der Z-Richtung wird durch ein Meßsystem 49 mit einem Glasmaßstab festgehalten und über die Leitung 50 dem Hauptrechner 12 mitgeteilt.

Der Servomotor 38 ist mit der Pinole 21 für die Bewegung in der Z-Koordinatenrichtung antriebsverbunden, wie dies bei 51 angedeutet ist.

Für die Hervorhebung von Kanten bei schlechtem Kontrast können Filter für das Graubild eingesetzt werden. Zur Beschreibung der Sollgeometrie der Werkstücke stehen die bekannten geometrischen Grundelemente wie Punkt, Gerade, Kreis, Ellipse, Ebene, Zylinder, Kugel und Kegel zur Verfügung.

Der schaltende Tastkopf 22 hat eine beliebige, undefinierte Tastauslenkung und einen Schaltpunkt des Mikroschalters im Tastkopf. Die Antastung erfolgt mechanisch mit dem Taststift 44 an der Werkstückoberfläche. Durch die Antastberührung wird der Mikroschalter im Tastkopf 22 betätigt und ein Impuls an den Rechner 12 gegeben, der für ein Meßergebnis steht. Der Taststift 44 trägt üblicherweise an seinem äußeren Ende eine Tastkugel 45.

Von großer Wichtigkeit ist es, daß der Lasertaster 24 und der Videotaster 23 in der Z-Achse 19 auf einem gleichen, gemeinsamen Strahlengang 52 liegen bzw. arbeiten. Nur so ist es möglich, daß von beiden Systemen, also vom Videotaster 23 mit Videokammera 41 und Bildverarbeitungseinrichtung 42 und vom Lasertaster 24 mit Impuls-Laserdiode 28 und Optik 34 sowie Spiegeln 32, 33 immer ein gleicher Meßpunkt auf dem Werkstück 26 erfaßt wird.

## Patentansprüche

1. Mehrkoordinatenmeß- und -prüfeinrichtung mit einer Maschinengrundeinheit, einem ersten (20, 22) und einem zweiten (21, 23, 24) in zumindest zwei Koordinatenrichtungen bewegbaren Tastsystem und einer Maschinensteuerungseinheit, dadurch gekennzeichnet, daß das erste Tastsystem (20, 22) aus einem mechanischen Tastkopf (22) mit zumindest einem Taststift (44) und das zweite Tastsystem (21, 23, 24) aus einem Videotaster (23) und einem Lasertaster (24) besteht, wobei der Videotaster (23) und der Lasertaster (24) auf einem gemeinsamen Stahlengang (52) zur Erfassung eines gleichen Meßpunktes auf einem Werkstück (26) eingerichtet sind, daß die Tastsysteme microprozessorgesteuert sind und unabhängig voneinander arbeiten, und daß der mechanische Tastkopf (22), der Videotaster (23) und der Lasertaster (24) über eine angeschlossene Software wahlweise alleine ansteuerbar oder in Zweier- oder Dreierkombination miteinander koppelbar sind.

2. Meß- und Prüfeinrichtung nach Anspruch 1, dadurch gekennzeichnet, daß für die Steuerung beider Tastsysteme (22, 23, 24) nur eine einzige Software eingerichtet ist.

3. Meß- und Prüfeinrichtung nach Anspruch 1, dadurch gekennzeichnet, daß zwei in Z-Koordinatenrichtung bewegbare Pinolen (20, 21) vorgesehen sind, von denen eine den mechanischen Tastkopf (22) mit Taststiften (44) und die andere den Videotaster (23) und den Lasertaster (24) aufnimmt.

4. Meß- und Prüfeinrichtung nach den Ansprüchen 1 und 3, dadurch gekennzeichnet, daß die Pinolen (20, 21) an einem gemeinsamen Meßschlitten (17) angeordnet sind.

5. Meß- und Prüfeinrichtung nach den Ansprüchen 1 und 3, dadurch gekennzeichnet, daß für jede Pinole (20, 21) ein Meßschlitten (18) vorgesehen ist, wobei die Meßschlitten sowohl synchron als auch getrennt voneinander in wahlweise gleiche oder unterschiedliche Koordinatenrichtungen bewegbar sind.

6. Meß- und Prüfeinrichtung nach den Ansprüchen 1 und 3, dadurch gekennzeichnet, daß der Lasertaster (24) sowohl im Scanbetrieb als auch als Autofokus einsetzbar ist.

7. Meß- und Prüfeinrichtung nach den Ansprüchen 1 bis 3 und 6, dadurch gekennzeichnet, daß der Lasertaster (24) in Z-Richtung derart angeordnet ist, daß er im Scanbetrieb berührungslos mit konstantem Abstand der Oberflächenkontur eines zu messenden Werkstückes (26) in den Koordinatenrichtungen X und Y folgen kann, wobei das Laserscansystem aus zwei verketteten, geschlossenen Regelkreisen (46, 47) gebildet ist, von denen der erste Regelkreis (46) derart ausgebildet ist, daß damit die Sendeleistung des Lasers auf das Reflektionsverhalten des Werkstückes (26) abstimmbar und in Abhängigkeit vom Empfangssignal im Empfänger (36) das Sendesignal im Sender (28) steuerbar ist, während der zweite übergeordnete Regelkreis (47) derart ausgebildet ist, daß damit das kontinuierliche Nachführen des Schlittens bzw. der Pinole (21) in Z-Richtung in die optimale Schärfeebene steuerbar ist.

8. Meß- und Prüfeinrichtung nach Anspruch 7, dadurch gekennzeichnet, daß das Empfängersystem (36) Differenzdioden (35) aufweist, durch welche ein Differenzsignal der in Abhängigkeit von Schärfeeinstellung des Objektivs (30) erzengbar ist, das zur automatischen Positionierung der Pinole (21) und damit des Objektivs (30) in die optimale Schärfeebene über einen Achsenverstärker (37) und einen Servomotor (38) verwendbar ist.

9. Meß- und Prüfeinrichtung nach den Ansprüchen 1, 7 und 8, dadurch gekennzeichnet, daß der Meßschlitten bzw. die Pinole (21) für die Z-Achse ein Meßsystem (49) mit einem Glasmaßstab aufweist und die jeweilige Höhenposition dem Hauptrechner (12) zuleitbar ist.

10. Meß- und Prüfeinrichtung nach den Ansprüchen 1 bis 3, dadurch gekennzeichnet, daß der Videotaster (23) derart eingerichtet ist, daß er Meßpunkte an der äußeren Kontur des Werkstückes (26) aufnehmen kann, die durch ein von einem Videoprozessor (43) erzeugtes digitalisiertes Bild des jeweiligen Werkstückausschnittes bestimmt sind, daß die Konturen des Werkstückes (26) in den X- und Y-Koordinaten durch Kantenfinderroutinen im digitalisierten Bild durch den Videotaster (23) erfaßbar sind, wobei die Meßpunkte in Z-Richtung mit einer Fokussiereinrichtung und dem Kamerabild oder einem hochgenauen Laser-Fokussiersystem gebildet sind.

11. Meß- und Prüfeinrichtung nach den Ansprüchen 1 bis 3, dadurch gekennzeichnet, daß der mechanische Taster wahlweise ein schaltender oder ein messender Taster (22) ist.

12. Meß- und Prüfeinrichtung nach den Ansprüchen 1 bis 11, dadurch gekennzeichnet, daß die Maschinengrundeinheit in Portalbauweise mit einem massiven Grundbett ausgeführt ist, die zur Werkstückaufnahme wahlweise einen Drehmeßtisch (10) aufweist und an einem Querträger (6) den oder die Meßschlitten (17, 18) für die Pinolen (20, 21) längsverschieblich in einer zu dem Portal (2, 3) rechtwinkligen oder gleichgerichteten Verfahrrichtung aufnimmt, wobei die oder der Meßschlitten (17, 18) und die Pinolen (20, 21) von einem Bedienpult (11) steuerbar sind und die erzielten Meßergebnisse am Bildschirm (13) einer Anzeigeeinheit und/oder wahlweise durch einen Drucker (14) protokollierbar sind.

## Claims

1. Multi-coordinate measuring and testing device, comprising a fundamental machine unit ; a first (20, 22) and a second (21, 23, 24) scanning system movable in at least two coordinate directions, and a machine control unit, characterised in that the first scanning system (20, 22) constitutes of a mechanical probe (22) having at least one sensing stylus (44) ; the second scanning system (21, 23, 24) constitutes of a video scanner (23) and a laser-scanner (24) ; the video scanner (23) and the laser-scanner (24) are located within the same common beam path (52) for determining a same measuring point on a workpiece (26) ; a microprocessor for controlling the scanning systems so as to operate independent of each other ; the mechanical probe (22), the video-scanner (23) and the laser-scanner (24) being selectively actuatable along through software to each other in a dual or triple operative combination.

2. Measuring and testing device according to claim 1, characterised in that a single software is provided for the actuation of the both scanning systems (22, 23, 24).

3. Measuring and testing device according to claim 1, characterised in that two spindles (20, 21) are movable in a Z-direction, one said spindle mounting the mechanical probe (22) having sensing stylus (44), and said other spindle mounting said video scanner (23) and said laser-scanner (24).

4. Measuring and testing device according to claims 1 and 3, characterised in that the spindles (20, 21) are arranged on a common measuring carriage (17).

5. Measuring and testing device according to claims 1 and 3, characterised in that a measuring carriage (18) is provided for each said spindle (20, 21) and said spindles being movable in synchronism and also separately of each other in selectively the same or differednt coordinate directions.

6. Measuring and testing device according to claims 1 and 3, characterised in that the laser-scanner (24) is employable in a scanning operation and also in autofocus.

7. Measuring and testing device according to claims 1-3 and 6, characterised in that the laser-scanner (24) is arranged in Z-direction so that the laser-scanner (24) during scanning operation non contactingly can follow the surface contour of a workpiece (26) being measured at a constant distance therefrom along the X- and Y-coordinate directions ; the laser scanning system comprising two interlinked closed control circuits (46, 47), the first said control circuit (46) is improved in that method that the transmitting power of the laser is determinable relativ to the reflective characteristics of the workpiece (26) and in dependence upon a receiving signal in a receiver (36) controlling a transmission signal in a transmitter (28), and the second said control circuit (47) is improved in that manner that the continual follow-up of the measuring carriage and spindle (21) is controllable in the Z-direction into an optimum focusing plane.

8. Measuring and testing device according to claim 7, characterised in that the receiver system (36) includes differentiating diodes (35) for generating a differential signal in conformance with the focusing setting of a lens (30), the said Z-axis being automatically positioned through a linear amplifies (37) and a servomotor (38) into the focusing plane.

9. Measuring and testing device according to claims 1, 7 and 8, characterised in that the measuring carriage and spindle (21) for the Z-axis includes a measuring system (49) with a glas measuring rod, and the present position of elevation is conveyed to a main computer.

10. Measuring and testing device according to claims 1-3, characterised in that the video scanner (23) is provided to receive measuring points along the external contour of the workpiece (26), the said measuring points being determinded by a digitalized picture of a respective segment of the workpiece (26), which is generated by a video processor (43), and the contours of the workpiece (26) being determinable along the X- and Y-coordinates through edge tracing routines in the digitalized picture, and the measuring points in the Z-direction being formed with a focusing means and the camera picture or a high-precision laser focusing system.

11. Measuring and testing device according to claims 1-3, characterised in that the mechanical probe is selectively a switching or a measuring probe (22).

12. Measuring and testing device according to claims 1-11, characterised in that the fundamental machine unit comprises a portal-like gantry structure having a solid base, selectively including a measuring turntable (10) for receiving the workpiece (26), and a cross-carrier (6) supporting the measuring carriage (17, 18) for the spindles (20, 21) for longitudinal displacement thereon in a direction of travel at right angles or equally directed relative to the gantry structure, the measuring carriage (17, 18) and the spindles (20, 21) being controllable from a control panel (11) and the obtained results of measurement being recordable on a picture screen (13) of a display unit or selectively on a printer (14).

## Revendications

1. Dispositif de mesure et de vérification de coordonnées comportant une unité de base de machine, un premier système de palpage (20, 22) et un deuxième système de palpage (21, 23, 24), déplaçables dans au moins deux directions de coordonnées et une unité de commande de machine, caractérisé en ce que le premier système de palpage (20, 22) est constitué par une tête de palpage (22) mécanique avec au moins un doigt de palpage (44) et le deuxième système de palpage (21, 23, 24) est constitué par un palpeur vidéo (23) et un palpeur laser (24), le palpeur vidéo (23) et le palpeur laser (24) étant installés sur un faisceau commun (52) pour enregistrer un même point de mesure sur une pièce à usiner (26), en ce que les systèmes de palpage sont commandés par microprocesseur et fonctionnent indépendamment l'un de l'autre et en ce que la tête de palpage mécanique (22), le palpeur vidéo (23) et le palpeur laser (24) peuvent être au choix commandés seuls par un logiciel connecté ou accouplés entre eux par deux ou par trois.

2. Dispositif de mesure et de vérification selon la revendication 1, caractérisé en ce qu'un seul logiciel est installé pour la commande des deux systèmes de palpage (22, 23, 24).

3. Dispositif de mesure et de vérification selon la revendication 1, caractérisé en ce qu'il est prévu deux fourreaux (20, 21) déplaçables dans la direction des coordonnées (Z), dont un loge la tête de palpage mécanique (22) avec doigts de palpage (44) et l'autre le palpeur vidéo (23) et le palpeur laser (24).

4. Dispositif de mesure et de vérification selon les revendications 1 et 3, caractérisé en ce que les fourreaux (20, 21) sont placés sur un chariot de mesure (17) commun.

5. Dispositif de mesure et de vérification selon les revendications 1 et 3, caractérisé en ce que pour chaque fourreau (20, 21) il est prévu un chariot de mesure (18), les chariots de mesure étant déplaçables de manière synchrone ainsi que séparément l'un de l'autre, au choix dans des mêmes directions de coordonnées ou dans des directions différentes.

6. Dispositif de mesure et de vérification selon les revendications 1 et 3, caractérisé en ce que le palpeur laser (24) peut être utilisé en balayage ainsi qu'en focalisation automatique.

7. Dispositif de mesure et de vérification selon les revendications 1 à 3 et 6, caractérisé en ce que le palpeur laser (24) est placé dans la direction (Z) de manière qu'en fonctionnement de balayage il puisse suivre sans contact, à une distance constante, le contour superficiel d'une pièce (26) à mesurer dans les directions de coordonnées (X et Y), le système de balayage à laser étant formé par deux circuits de régulation (46, 47) fermés, enchaînés, dont le premier circuit de régulation (46) est conçu de manière que la puissance d'émission du laser puisse être accordée sur le comportement en réflexion de la pièce à usiner (26) et de manière que le signal d'émission puisse être commandé dans l'émetteur (28) en fonction du signal de réception dans le récepteur (36), tandis que le deuxième circuit de régulation (47) d'asservissement est conçu de manière que la poursuite continue du chariot ou du fourreau (21) dans la direction (Z), puisse être commandée dans le plan de netteté optimale.

8. Dispositif de mesure et de vérification selon la revendication 7, caractérisé en ce que le système de réception (36) comporte des diodes différentielles (35) par lesquelles un signal différentiel peut être produit en fonction du réglage de netteté de l'objectif (30), lequel peut être utilisé pour le positionnement automatique du fourreau (21) et donc de l'objectif (30) dans le plan de netteté optimal, par l'intermédiaire d'un amplificateur d'axes (37) et d'un servomoteur (38).

9. Dispositif de mesure et de vérification selon les revendications 1, 7 et 8, caractérisé en ce que le chariot de mesure ou le fourreau (21) comporte pour l'axe (Z) un système de mesure (49) avec une échelle en verre et en ce que la position en hauteur respective peut être envoyée au calculateur principal (12).

10. Dispositif de mesure et de vérification selon les revendications 1 à 3, caractérisé en ce que le palpeur vidéo (23) est installé de manière à pouvoir enregistrer des points de mesure sur le contour extérieur de la pièce à usiner (26) lesquels points de mesure sont déterminés par une image numérisée, produite par un processeur vidéo (34), de la partie respective de la pièce à usiner, en ce que les contours de la pièce à usiner (26) peuvent être enregistrés dans les coordonnées (X et Y), par le palpeur vidéo (23), par des routines de détection des bords dans l'image numérisée, les points de mesure dans la direction (Z) étant formés par un dispositif de focalisation et d'images de caméra ou par un système de focalisation à laser extrêmement précis.

11. Dispositif de mesure et de vérification selon les revendications 1 à 3, caractérisé en ce que le palpeur mécanique est au choix un palpeur (22) qui opère une commutation ou qui mesure.

12. Dispositif de mesure et de vérification selon les revendications 1 à 11, caractérisé en ce que l'unité de base de machine est réalisée en construction portique avec une base massive qui comporte en option, pour loger la pièce à usiner, une table de mesure tournante (10) et qui loge sur une poutre transversale (16) le ou les chariot(s) de mesure (17, 18) pour les fourreaux (20, 21), de manière déplaçable dans une direction de déplacement perpendiculaire au portique (2, 3) ou dans le même sens que celui-ci, le ou les chariot(s) de mesure (17, 18) et les fourreaux (20, 21) pouvant être commandés à partir d'un pupitre de commande (11) et les résultats de mesure obtenus pouvant être visualisés sur l'écran (13) d'une unité d'affichage et/ou au choix faire l'objet de protocoles par une imprimante (14).

FIG.1

EP 0 330 901 B1

FIG. 2

EP 0 330 901 B1

FIG. 3